# FASCICULE DE BREVET EUROPEEN

(11) **EP 0 616 205 B1**
(45) Date de publication et mention de la délivrance du brevet: **08.10.1997**
(21) Numéro de dépôt: 94400450.6
(22) Date de dépôt: 03.03.1994
(51) Int. Cl.: G01N 15/06, G01N 21/53, G01N 21/35

(54) **Procédé et appareil de mesure et d'analyse des particules solides émises par un moteur Diesel**
Verfahren und Gerät zur Messung und Analyse von einem Dieselmotor erzeugten Festteilchen
Method and device for measuring and analyzing solid particles emitted by a diesel engine

(30) Priorité: 17.03.1993 FR 9303069
(43) Date de publication de la demande: 21.09.1994
(73) Titulaire: AUTOMOBILES PEUGEOT, 75761 Paris Cedex 16 (FR); AUTOMOBILES CITROEN, 92200 Neuilly-sur-Seine (FR); REGIE NATIONALE DES USINES RENAULT S.A., 92109 Boulogne Billancourt (FR)
(72) Inventeur: Haupais, Alain, F-69890 La Tour de Salvagny (FR)
(74) Mandataire: Seytre, Françoise

(56) Documents cités:
- WO-A-89/03029
- DE-A- 3 240 559
- DE-A- 4 220 997
- US-A- 4 633 706
- US-A- 4 747 297
- US-A- 4 827 760
- US-A- 4 914 719
- US-A- 5 096 834
- APPLIED OPTICS., vol.21, no.22, 15 Novembre 1982, NEW YORK US pages 4077 - 4086 D. M. ROESSLER 'Diesel particle mass concentration by optical techniques'
- MEASUREMENT SCIENCE AND TECHNOLOGY, vol.3, no.2, Février 1992, BRISTOL GB pages 191 - 195 S. F. JOHNSTON 'Gas monitors employing infrared LEDS'

## Description

L'invention concerne un procédé et un appareil de mesure et d'analyse des particules solides émises à l'échappement d'un moteur Diesel.

Les réglementations concernant la réduction des émissions polluantes des véhicules automobiles prévoient des cycles normalisés de mesure à l'échappement de ces véhicules. En ce qui concerne les moteurs Diesel, ces mesures portent, notamment, sur la concentration des particules solides contenues dans les gaz émis à l'échappement.

Pour réaliser ces mesures, on a proposé, par exemple dans le brevet US 4 391 338, de peser les particules retenues dans un filtre, cette technique requiert l'utilisation d'un tunnel de dilution et, pour obtenir des pesées significatives, des durées de prélèvement longues, incompatibles, en particulier, avec le détail des régimes transitoires imposés par les cycles d'essais normalisés. De même, les mesures de prise de poids instantanée, faisant appel, par exemple, au décalage de la fréquence de résonance d'un cristal vibrant,manquent de précision du fait de problèmes liés à l'efficacité de captation de l'élément de mesure et à son nettoyage.

Une autre difficulté rencontrée dans ce type de mesure réside dans la composition des particules à mesurer. En effet, ces particules, prélevées dans les conditions normalisées de dilution, sont constituées à la fois de particules de carbone, des résidus des minéraux présents dans le gazole et l'huile consommée par le moteur (l'ensemble de ces particules et résidus étant qualifié de "suies"dans la suite du texte) et de la partie condensable, à la température atmosphérique ambiante, des hydrocarbures imbrûlés présents dans les gaz d'échappement.

Si, pour mesurer la concentration en particules solides, on fait simplement le total du débit masse des suies retenues par un filtre et de celui des hydrocarbures imbrûlés on est donc conduit à surestimer systématiquement les émissions de ces particules.

Pour corriger cette surestimation on a proposé d'utiliser une fraction condensable pré-établie des hydrocarbures. Toutefois, cette fraction est très variable d'un point de fonctionnement à l'autre d'un même moteur. De cette façon on fait donc une estimation très imprécise du débit de particules, surtout pour les points ou les hydrocarbures sont majoritaires dans celles-ci.

Il apparaît donc nécessaire de mesurer d'une part les hydrocarbures totaux et d'autre part les hydrocarbures non condensés pour en déduire la masse des hydrocarbures condensés qui participent aux particules solides. C'est ce qui est proposé, par exemple, dans le brevet US 4 747 297 dans lequel une partie de l'échantillon prélevé est refroidie par dilution dans un tunnel pour permettre la condensation des hydrocarbures. Or, pour que la différence entre les deux fractions d'hydrocarbures mesurées soit exacte, il faut que la mesure porte, à chaque instant sur le même échantillon et que, par conséquent, le temps de transit soit le même dans les deux lignes de mesure, ces conditions sont difficiles à réaliser avec un procédé de dilution.

Pour remédier à ces divers problèmes l'invention propose un procédé et un appareil d'analyse et de mesure de la concentration des particules solides émises à l'échappement des moteurs Diesel, procédé dans lequel l'échantillon de gaz prélevé à la sortie dudit échappement est séparé en deux parties, la première étant maintenue à une température égale ou supérieure à une valeur prédéterminée à partir de laquelle les hydrocarbures imbrûlés se trouvent en phase gazeuse et la seconde étant refroidie au-dessous d'une température prédéterminée à partir de laquelle une fraction des hydrocarbures imbrûlés contenus à l'état fluide dans l'échantillon se trouve condensée avant passage dans un filtre capable de retenir les particules solides contenues dans ledit échantillon, ce procédé comportant les étapes suivantes :
- mesure de l'absorption par chacune des deux fractions de l'échantillon d'un rayonnement lumineux émis par une source appropriée pour deux longueurs d'onde prédéterminées :
   . une longueur d'onde (L₁), représentative d'un pic d'absorption spécifique des hydrocarbures,
   . une longueur d'onde (L₂), située en dehors des pics d'absorption spécifique de tout constituant non solide susceptible d'être présent en quantité significative dans les gaz analysés,
- conversion des mesures effectuées sur la fraction d'échantillon maintenue à température élevée pour en déduire : :
   . à la longueur d'onde (L₂), la concentration en suies,
   . à la longueur d'onde (L₁),la concentration en suies et en hydrocarbures imbrûlés totaux,
   . par différence entre les deux résultats précédents, la concentration totale en hydrocarbures imbrûlés.
- conversion des mesures effectuées sur la fraction d'échantillon réfrigérée pour en déduire :
   . à la longueur d'onde (L₁), la concentration en hydrocarbures non condensés,
   . à la longueur d'onde (L₂), l'état du filtre contenue dans cette ligne de mesure.
- différence entre la concentration en hydrocarbures totaux et la concentration en hydrocarbures non condensés, pour obtenir la concentration en hydrocarbures condensés,
- addition de la concentration en hydrocarbures condensés et de la concentration en suies pour obtenir la concentration totale en particules solides contenues dans l'échantillon de gaz analysé.

. De façon avantageuse, on effectue encore, sur chacune des fractions de l'échantillon une deuxième mesure de l'absorption d'un rayonnement lumineux émis par une source appropriée pour une longueur d'onde (L₃) correspondant au pic d'absorption spécifique du gaz carbonique.
. L'invention propose aussi un appareil pour la mise en oeuvre de ce procédé tel que revendiqué dans la revendication indépendante 3.
. De façon avantageuse, chaque ligne de mesure est munie d'un dispositif de mesure optique transversal comportant un second tube de conduction de la lumière monté sur le tube du dispositif de mesure axial, perpendiculairement à l'axe de celui-ci, de façon que deux de ses tronçons, soient disposés de part et d'autre du tube du premier dispositif de mesure et diamétralement alignés par rapport à celui-ci,une source de rayonnement lumineux placée à l'extrémité libre d'un des tronçons et un photorécepteur disposé au droit du rayonnement lumineux issu du deuxième tronçon du tube conducteur et sensible à une longueur d'onde prédéterminée (L₃) dudit rayonnement lumineux correspondant à un pic d'absorption spécifique du gaz carbonique.
. En variante, un miroir de renvoi est placé dans le tube conducteur de lumière du dispositif de mesure transversal, entre deux tronçons dudit tube disposés à angle droit, de façon à réfléchir perpendiculairement sur le photorécepteur, disposé face à l'extrémité libre du second tronçon, le rayonnement émis par la source lumineuse.
. On précisera encore qu'un dispositif monochromateur à commutation rapide est interposé sur le trajet optique de chacun des dispositifs de mesure, entre un hublot placé à la sortie du tube de mesure et le photorécepteur associé.
. En variante, le dispositif monochromateur à commutation rapide est interposé sur le trajet optique de chacune des lignes de mesure, entre un hublot placé à l'entrée du tube de mesure et la source lumineuse associée.
. Lorsque l'appareil comporte un dispositif de mesure transversal muni d'un dispositif optique de renvoi, un même dispositif monochromateur à commutation rapide est interposé sur le trajet optique de chacune des voies de mesure à la fois entre les hublots placés à la sortie des tubes de mesure axiaux et transversaux et les photorécepteurs associés à chacun de ces hublots.
. On précisera enfin que la source lumineuse est une source de rayonnement infrarouge émettant au moins dans les longueurs d'onde (L₁),(L₂),(L₃) prédéterminées,
. et qu'une pompe munie d'un réglage ou d'un régulateur de débit est installée à la sortie de chaque voie de mesure.

D'autres caractéristiques et avantages de l'invention apparaîtront à la lecture de la description détaillée qui va suivre, pour la compréhension de laquelle on se reportera aux dessins annexés, dans lesquels :
- La figure 1 est un schéma de l'agencement des circuits de gaz dans l'appareil de mesure,
- la figure 2 est un schéma de principe du dispositif de mesure optique faisant référence à l'un des deux circuits de mesure.

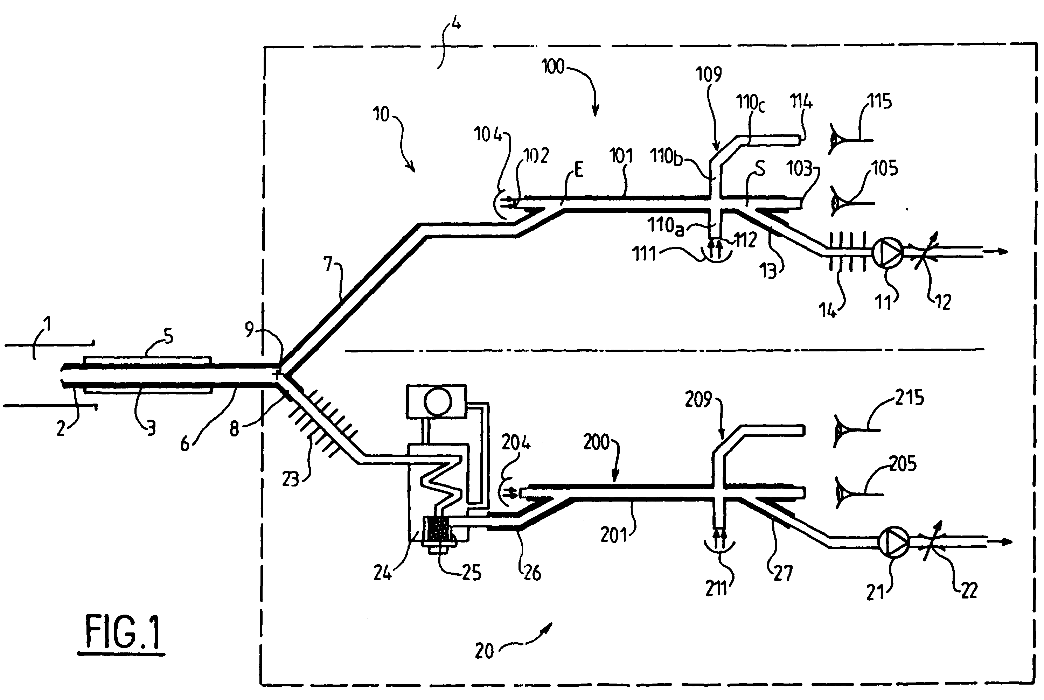

A gauche en regardant le dessin de la figure 1, on voit l'extrémité 1 d'une ligne d'échappement de moteur Diesel dans laquelle est introduite une sonde 2 qui permet de prélever en continu un échantillon de gaz. La sonde 2 est reliée à un conduit 3 qui permet de transporter cet échantillon à l'entrée de l'appareil de mesure 4. Pour éviter la condensation d'une partie des hydrocarbures imbrûlés présents dans les gaz prélevés, les parois internes de cette ligne sont conservées à des températures partout supérieures à 180°. Pour ce faire, le conduit 3 est, par exemple, entouré d'un manchon 5 dans lequel on fait circuler un fluide caloporteur (tel que de l'huile) dont la température est régulée dans une plage déterminée (180 à 200°, par exemple). Cette disposition permet d'obtenir, quelle que soit la température initiale des gaz prélevés par la sonde 2, une température presque constante, en sortie du conduit 3, des gaz de l'échantillon.

Un conduit additionnel 6, souple ou non, branché en sortie du conduit 3 et chauffé électriquement permet, si nécessaire, d'augmenter la distance entre la sonde de prélèvement et l'appareil de mesure 4 proprement dit.

A l'entrée de cet appareil, le conduit en provenance de la sonde se sépare en deux branches: la branche 7 amène ainsi une partie de l'échantillon de gaz dans la voie de mesure chaude 10, tandis que la branche 8 amène l'autre partie de l'échantillon dans la voie de mesure froide 20.

Sur chacune de ces voies, une pompe, respectivement 11, 21, placée en sortie de la ligne de transit de l'échantillon de gaz, assure la circulation du gaz dans celle-ci. De préférence, les pompes sont munies d'un régulateur de débit 12,22 et leur débit est ajusté pour que le temps de transit de l'échantillon de gaz entre le point 9 de séparation des deux branches 7 et 8 et le point de mesure, soit identique dans les deux voies, ceci afin que, à chaque instant, la mesure porte sur le même échantillon de gaz.

La voie de mesure chaude 10 est maintenue à une température constante égale ou supérieure à une valeur à partir de laquelle les hydrocarbures imbrûlés se trouvent en phase gazeuse, soit environ 180 à 200°, sur toute sa longueur. Ce chauffage est réalisé au moyen d'un dispositif (non représenté) de chauffage électrique ou de circulation d'un fluide caloporteur.

En aval du point de bifurcation 9, la branche 8 du conduit passe dans un dispositif de refroidissement à air 23 qui assure un refroidissement préalable de l'échantillon de gaz avant le passage de celui-ci dans une enceinte réfrigérée 24 dans laquelle ledit échantillon est refroidi à une température inférieure à celle à partir de laquelle une fraction des hydrocarbures imbrûlés, présents dans le flux gazeux, se condense. L'enceinte 24 contient encore un filtre 25 à travers lequel passe l'échantillon de gaz refroidi et qui retient les particules solides contenues dans celui-ci.

La température retenue pour le refroidissement des gaz est de 52° pour tenir compte des conditions normalisées de mesure des particules solides imposées par la réglementation actuelle. Il va de soi que d'autres valeurs de cette température peuvent être fixées, en fonction, notamment, de l'évolution de cette réglementation.

A la sortie de l'enceinte 24, l'échantillon gazeux, dans lequel on ne trouve plus que la partie non condensée des hydrocarbures, est amené par le conduit 26 dans la ligne de mesure optique 200. Cette ligne de mesure ainsi que le conduit 26 peut être, avantageusement, réchauffée à une température supérieure à celle de l'enceinte 24.

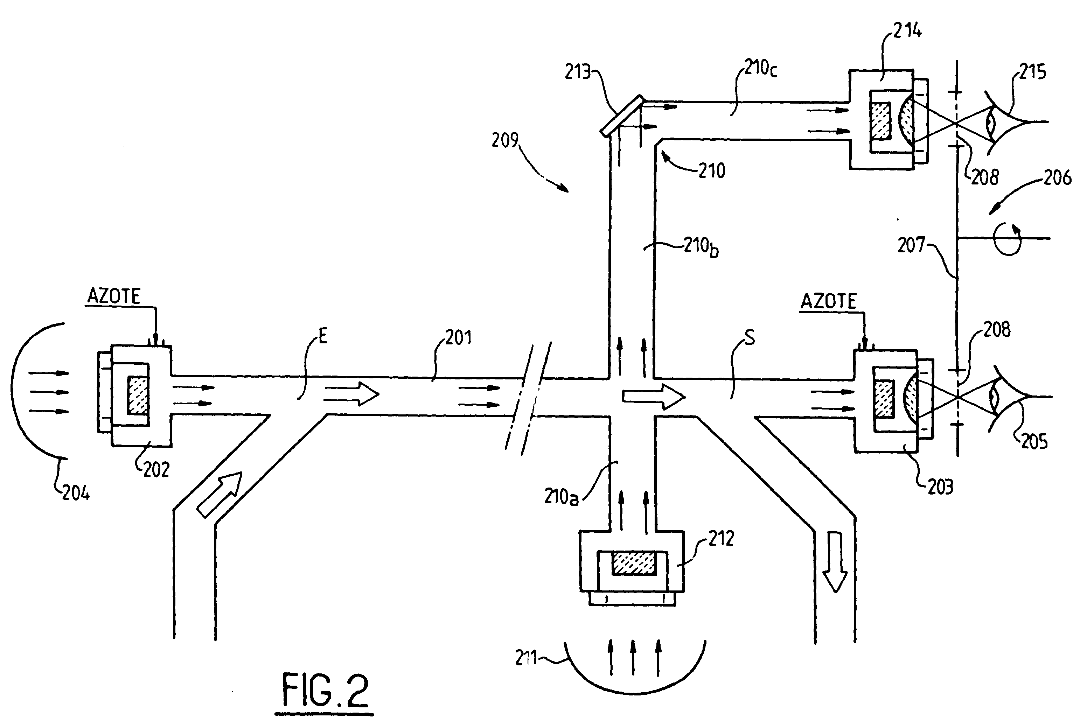

On va maintenant décrire la ligne de mesure optique 200, en référence à la figure 2. Il faut noter, toutefois, que la ligne de mesure optique 100, installée dans la voie de mesure chaude 10, est identique. De sorte que les éléments correspondants de ces deux lignes, visibles sur la figure 1 sont repérés par le même chiffre des unités et des dizaines, seul change le chiffre des centaines: 1 pour la ligne de mesure chaude et 2 pour la ligne de mesure froide.

La ligne de mesure froide 200 est donc constituée d'un tube lisse et droit 201 dont l'une des extrémité E reçoit le conduit 26 d'amenée de l'échantillon gazeux lequel est évacué par un conduit 27, branché d'une part à l'autre extrémité S du tube 201, et d'autre part à l'entrée de la pompe 21.

Les extrémités E et S du tube 201 sont munies de hublots transparents, respectivement 202,203, dont le matériau sera choisi en fonction des longueurs d'onde utilisées pour les mesures optiques d'absorption.

Une source lumineuse 204 est disposée devant le hublot 202 d'entrée de ligne de mesure, pour y introduire un rayonnement infrarouge intense et sensiblement parallèle. Cette source est constituée, par exemple, de filaments chauffés munis d'un réflecteur et/ou de lentilles pour assurer la concentration du faisceau lumineux. En variante, elle peut être constituée d'un assemblage de sources de type laser, émettant chacune dans une des longueurs d'ondes prédéterminées ou d'un dispositif de type laser à longueur d'onde très rapidement modifiable.

Un photorécepteur 205 est placé derrière le hublot de sortie 203 pour recevoir la lumière provenant de celui-ci et la transformer en signal électrique représentatif de la valeur mesurée et exploitable par une unité de calcul (non représentée). Ce photorécepteur est choisi pour donner une réponse et un bruit corrects aux longueurs d'onde et aux cadences de mesure utilisées.

Un disque monochromateur à commutation rapide 206 est interposé sur le trajet optique du rayonnement lumineux, soit entre la source 204 et le hublot d'entrée 202, soit entre le hublot de sortie 203 et le photorécepteur 205, comme représenté figure 2. Ce monochromateur peut être d'un type utilisant, comme représenté, un barillet tournant 207 portant des filtres interférentiels 208 laissant passer les longueurs d'onde utilisées, ou d'un type (Fabry-Perrot ou autre) permettant de commuter rapidement les longueurs d'onde transmises.

Le dispositif de mesure optique que l'on vient de décrire est disposé dans le sens axial, par rapport au déplacement de l'échantillon gazeux, de sorte que le trajet du rayonnement lumineux à l'intérieur de cet échantillon dépend de la longueur du tube 201 et peut, par conséquent, être assez important. Il est ainsi possible d'obtenir des mesures d'absorption significatives aux longueurs d'onde L₁ et L₂ choisies.

Ce dispositif de mesure axial peut être dupliqué par un dispositif analogue 209, disposé dans le sens transversal, par rapport au trajet de l'échantillon gazeux. Dans ce cas le second tube de conduction de la lumière 210 est monté sur le premier tube 201, perpendiculairement à son axe, de façon que deux de ses tronçons, 210a,210b soient disposés de part et d'autre dudit tube 201 et diamétralement alignés par rapport à celui-ci. L'extrémité libre du tronçon 210a comporte un hublot 212 d'entrée du rayonnement lumineux en face duquel est placée la source de rayonnement infrarouge 211. Le tronçon 210b est suivi d'un troisième tronçon 210c, disposé perpendiculairement au tronçon 210b. Un miroir de renvoi 213 est placé à la jonction de ces deux tronçons tandis que l'extrémité libre du tronçon 210c est munie d'un hublot de sortie 214 du rayonnement lumineux en face duquel est disposé le photorécepteur 215. La disposition que l'on vient de décrire permet d'utiliser le même barillet tournant 206 que le dispositif de mesure axial 200.

On remarque que le rayonnement infrarouge émis par la source 211 disposée dans ce deuxième dispositif de mesure parcours dans l'échantillon gazeux un trajet beaucoup plus faible que dans le premier dispositif puisque ce trajet est fonction du diamètre du tube 201.

Comme on l'a expliqué ci-dessus, la branche 7 du conduit 6 qui amène une partie de l'échantillon gazeux dans la voie de mesure chaude 10 débouche à l'entrée d'un tube lisse 101 qui fait partie d'une ligne de mesure optique 100 identique à celle qui vient d'être décrite. A la sortie de cette ligne, un conduit 13 relie le tube 101 à la pompe 11 après, si nécessaire, passage dans un échangeur de chaleur 14.

Le système de mesure optique que l'on vient de décrire permet de mesurer l'intensité lumineuse transmise par la source de rayonnement infrarouge au photorécepteur, au travers de l'échantillon gazeux présent dans le tube axial de chaque ligne de mesure. En fonction des constituants de cet échantillon, les longueurs d'onde utilisées pour effectuer cette mesure sont définies de la manière suivante :
L₁ : longueur d'onde d'un pic d'absorption spécifique des hydrocarbures, par exemple au voisinage de 2900 à 3000cm⁻¹,
L₂ : longueur d'onde située en dehors des pics d'absorption spécifique des hydrocarbures, de l'eau, du gaz carbonique et de l'oxyde de carbone ou de tout autre constituant non solide susceptible d'être présent en quantité significative dans les gaz analysés,
L₃ : longueur d'onde d'un pic d'absorption spécifique du gaz carbonique.

Dans la ligne de mesure chaude 100, tous les constituants, condensables ou non, du gaz à analyser sont présents. Par conséquent la mesure d'intensité lumineuse axiale effectuée dans cette ligne au travers de l'absorption de lumière à la longueur d'onde L₂ permet d'accéder à la concentration volumique en suies, tandis que la mesure d'intensité lumineuse axiale au travers de l'absorption de lumière à la longueur d'onde L₁ résulte à la fois des particules solides précédentes et des hydrocarbures présents sur le trajet optique. Ainsi, par différence, on accède à la concentration volumique en hydrocarbures totaux dans les gaz chauds.

Dans la ligne froide, au contraire, du fait de la rétention par le filtre 25 des suies et de la partie condensable des hydrocarbures imbrûlés, la mesure d'intensité lumineuse axiale permet, au travers de l'absorption de la lumière à la longueur d'onde L₁, d'accéder à la concentration volumique en hydrocarbures non condensés. De plus, une mesure faite à la longueur d'onde L₂ dans cette ligne permet de s'assurer que l'efficacité de rétention du filtre est correcte.

Enfin, la différence entre les concentrations en hydrocarbures totaux mesurées dans la ligne chaude et les concentrations en hydrocarbures non condensés mesurées dans la ligne froide donne la participation des hydrocarbures condensés à la concentration en particules. Cette dernière ajoutée à la concentration en suies, mesurée sur la ligne chaude, permet d'accéder enfin à la concentration totale en particules solides.

Par le dispositif de mesure optique transversal 109,209, on effectue des mesures au travers de l'absorption de lumière à la longueur d'onde L₃ de façon à en déduire la concentration volumique en gaz carbonique. En effet, une telle mesure ne peut pas être effectuée avec le dispositif axial du fait de l'absorption trop importante due à la longueur du trajet à parcourir par le rayonnement lumineux dans l'échantillon gazeux.

En outre, la mesure par différence entre les hydrocarbures totaux de la ligne chaude et les hydrocarbures non condensables de la ligne froide nécessite qu'en régime transitoire le temps de transfert des gaz dans les deux lignes soit identique. On a vu que le réglage du débit des pompes 11,21 permet d'égaliser ces temps mais le colmatage progressif du filtre 25 peut perturber cet équilibre. Les mesures de la teneur en CO₂ faites sur les dispositifs de mesure transversaux 109,209 permettent alors de contrôler l'équilibre des temps de réponse. Si une différence est constatée entre la mesure instantanée effectuée sur l'une des voies par rapport à l'autre, cette différence est exploitée par l'unité de calcul pour rephaser les signaux enregistrés sur les deux lignes et/ou modifier en conséquence le réglage de débit des pompes.

Le procédé de mesure que l'on vient de décrire repose sur des mesures de concentration volumique. Pour convertir ceux-ci en concentration massique, il faut placer dans chaque ligne de mesure des capteurs de pression et de température afin de pouvoir effectuer la correction nécessaire en fonction de la pression et de la température mesurées pour en déduire la concentration massique.

## Revendications

1. Procédé d'analyse et de mesure de la concentration des particules solides émises à l'échappement des moteurs Diesel, dans lequel l'échantillon de gaz prélevé à la sortie dudit échappement est séparé en deux parties, la première étant maintenue à une température égale ou supérieure à une valeur prédéterminée à partir de laquelle les hydrocarbures imbrûlés se trouvent en phase gazeuse et la seconde étant refroidie au-dessous d'une température prédéterminée à partir de laquelle une fraction des hydrocarbures imbrûlés contenus à l'état fluide dans l'échantillon se trouve condensée avant passage dans un filtre capable de retenir les particules solides contenues dans ledit échantillon,
caractérisé en ce qu'il comporte les étapes suivantes :
- mesure de l'absorption par chacune des deux fractions de l'échantillon d'un rayonnement lumineux émis par une source appropriée pour deux longueurs d'onde prédéterminées :
. une longueur d'onde (L₁) représentative d'un pic d'absorption spécifique des hydrocarbures,
. une longueur d'onde (L₂) située en dehors des pics d'absorption spécifique de tout constituant non solide susceptible d'être présent en quantité significative dans les gaz analysés,
- conversion des mesures effectuées sur la fraction d'échantillon maintenue à température élevée pour en déduire : :
. à la longueur d'onde (L₂), la concentration en suies,
. à la longueur d'onde (L₁),la concentration en suies et en hydrocarbures imbrûlés totaux,
. par différence entre les deux résultats précédents, la concentration totale en hydrocarbures imbrûlés.
- conversion des mesures effectuées sur la fraction d'échantillon réfrigérée pour en déduire :
. à la longueur d'onde (L₁), la concentration en hydrocarbures non condensés,
. à la longueur d'onde (L₂), l'état du filtre contenue dans cette ligne de mesure.
- différence entre la concentration en hydrocarbures totaux et la concentration en hydrocarbures non condensés, pour obtenir la concentration en hydrocarbures condensés,
- addition de la concentration en hydrocarbures condensés et de la concentration en suies pour obtenir la concentration totale en particules solides contenues dans l'échantillon de gaz analysé.

2. Procédé d'analyse et de mesure selon la revendication 1,
caractérisé en ce que l'on effectue sur chacune des fractions de l'échantillon une mesure de l'absorption d'un rayonnement lumineux émis par une source appropriée pour une longueur d'onde (L₃) correspondant au pic d'absorption spécifique du gaz carbonique.

3. Appareil pour la mise en oeuvre du procédé selon la revendication 1 ou 2, comportant un conduit (3, 6) de prélèvement d'un échantillon gazeux et deux voies de mesure connectées à ce conduit, une voie (10) étant maintenue à une température égale ou supérieure à une valeur prédéterminée à partir de laquelle les hydrocarbures imbrûlés se trouvent en phase gazeuse, une voie (20) comportant une enceinte (24) de refroidissement de l'échantillon au-dessous d'une température prédéterminée à partir de laquelle une partie des hydrocarbures imbrûlés, contenus à l'état fluide dans ledit échantillon, se trouve condensée ainsi qu'un filtre (25) de rétention des particules solides contenues dans l'échantillon précité,
les deux voies de mesure (10),(20) comportant une ligne de mesure optique (100),(200) composée d'un tube lisse (101),(201) dans lequel est introduit l'échantillon gazeux, d'une source de rayonnement lumineux (104),(204) placée à une extrémité du tube (101), (201), d'un dispositif monochromateur à commutation rapide (206), d'un photorécepteur (105),(205) placé à l'autre extrémité dudit tube et sensible à deux longueurs d'onde prédéterminées du rayonnement émis par la source (104), (204), une longueur d'onde (L₁) correspondant au pic d'absorption spécifique des hydrocarbures et une longueur d'onde (L₂) située en dehors des pics d'absorption spécifique de tout constituant non solide susceptible d'être présent en quantité significative dans l'échantillon gazeux analysé.

4. Appareil selon la revendication 3,
dans lequel chaque ligne de mesure (100),(200) est munie d'un dispositif de mesure optique transversal (109),(209) comportant un second tube de conduction de la lumière (110),(210) monté sur le tube (101),(201) du dispositif de mesure axial, perpendiculairement à l'axe de celui-ci, de façon que deux de ses tronçons, respectivement (110a,210a) et (110b,210b) soient disposés de part et d'autre du tube (101),(201) du premier dispositif de mesure et diamétralement alignés par rapport à celui-ci,une source de rayonnement lumineux (111),(211) placée à l'extrémité libre d'un des tronçons (110a),(210a) et un photorécepteur (115),(215) disposé au droit du rayonnement lumineux issu du deuxième tronçon (110b),(210b) du tube conducteur et sensible à une longueur d'onde prédéterminée (L₃) dudit rayonnement lumineux correspondant à un pic d'absorption spécifique du gaz carbonique.

5. Appareil selon la revendication 4,
dans lequel un miroir de renvoi (213) est placé dans le tube (110),(210) conducteur de lumière du dispositif de mesure transversal, entre deux tronçons (110b) et (110c), (210b) et (210c) dudit tube, disposés à angle droit,de façon à réfléchir perpendiculairement sur le photorécepteur (115),(215), placé face à l'extrémité libre du second tronçon (110c),(210c), le rayonnement émis par la source lumineuse (111),(211).

6. Appareil selon l'une des revendications 3, 4 ou 5,
dans lequel le dispositif monochromateur à commutation rapide est interposé sur le trajet optique de chacun des dispositifs de mesure, entre un hublot (103), (114), (203),(214) placé à la sortie du tube de mesure (101), (110), (201), (210) et le photorécepteur (105), (115), (205),(215) associé.

7. Appareil selon l'une des revendications 3, 4 ou 5,
dans lequel le dispositif monochromateur à commutation rapide est interposé sur le trajet optique de chacune des lignes de mesure, entre un hublot (101),(112), (201),(212) placé à l'entrée du tube de mesure (101),(110), (201),(210) et la source lumineuse (104),(111), (204),(211) associée.

8. Appareil selon la revendication 6, prise en combinaison avec la revendication 5,
dans lequel un même dispositif monochromateur à commutation rapide est interposé sur le trajet optique de chacune des voies de mesure (100),(200), à la fois entre les hublots placés à la sortie des tubes de mesure axiaux (101), (201) et transversaux (110),(210) et les photorécepteurs associés à chacun de ces hublots.

9. appareil selon l'une des revendications précédentes
dans lequel la source lumineuse (104),(204), (111),(211) est une source de rayonnement infrarouge émettant, au moins, dans les longueurs d'onde (L₁),(L₂),(L₃) prédéterminées.

10. Appareil selon l'une des revendications précédentes,
dans lequel une pompe (11),(21) munie d'un réglage ou d'un régulateur de débit (12),(22) est installée à la sortie de chaque voie de mesure (10),(20).

## Claims

1. Method for analysing and measuring the concentration of the solid particles emitted in the exhaust of Diesel engines, in which the sample of gas taken at the outlet of said exhaust is separated into two parts, the first being maintained at a temperature equal to or greater than a predetermined value, beyond which the non-burned hydrocarbons are in a gaseous phase and the second being cooled to below a predetermined temperature beyond which a fraction of the non-burned hydrocarbons contained in the fluid state in the sample is condensed before passing into a filter capable of retaining the solid particles contained in said sample,
characterised in that it comprises the following steps:
- measuring the absorption by each of the two fractions of the sample of a light ray emitted by an appropriate source for two predetermined wavelengths:
. a wavelength (L₁) representing a peak specific absorption of hydrocarbons,
. a wavelength (L₂) situated outside the peak specific absorptions of any non-solid constituent likely to be present in a significant quantity in the analysed gases,
- converting the measurements made on the fraction of sample maintained at a high temperature in order to deduce therefrom:
. at wavelength (L₂), the concentration of soot,
. at wavelength (L₁), the concentration of soot and total non-burned hydrocarbons,
. through the difference between the two preceding results, the total concentration of non-burned hydrocarbons,
- converting the measurements made on the fraction of refrigerated sample in order to deduce therefrom:
. at wavelength (L₁), the concentration of non-condensed hydrocarbons,
. at wavelength (L₂), the state of the filter contained in this measurement line,
- finding the difference between the concentration of total hydrocarbons and the concentration of non-condensed hydrocarbons, in order to obtain the concentration of condensed hydrocarbons,
- adding the concentration of condensed hydrocarbons and the concentration of soot in order to obtain the total concentration of solid particles contained in the analysed gas sample.

2. Analysis and measurement method according to Claim 1,
characterised in that, on each of the fractions of the sample, a measurement is made of the absorption of a light ray emitted by an appropriate source for a wavelength (L₃) corresponding to the peak specific absorption of the carbon dioxide.

3. Apparatus for implementing the method according to Claim 1 or 2, comprising a pipe (3, 6) for collecting a sample of gas and two measurement channels connected to this pipe, one channel (10) being maintained at a temperature equal to or greater than a predetermined value beyond which the non-burned hydrocarbons are in a gaseous phase, one channel (20) comprising an enclosure (24) for cooling the sample to below a predetermined temperature beyond which part of the non-burned hydrocarbons, contained in the fluid state in said sample, are condensed, together with a filter (25) for retaining the solid particles contained in the aforementioned sample,
the two measurement channels (10), (20) comprising an optical measurement line (100), (200) composed of a smooth tube (101), (201) into which the gas sample is introduced, a source of light radiation (104), (204) placed at one end of the tube (101), (201), a fast-switching monochromator device (206), a photoreceptor (105), (205) placed at the other end of said tube and sensitive to two predetermined wavelengths of the radiation emitted by the source (104), (204), a wavelength (L₁) corresponding to the peak specific absorption of hydrocarbons and a wavelength (L₂) situated outside the peak specific absorptions of any non-solid constituent likely to be present in a significant quantity in the analysed gas sample.

4. Apparatus according to Claim 3,
in which each measurement line (100), (200) is provided with a transverse optical measurement device (109), (209) comprising a second light-conducting tube (110), (210) mounted on the tube (101), (201) of the axial measurement device, perpendicular to the axis thereof, so that two of its sections, (110a, 210a) and (110b, 210b) respectively, are arranged on either side of the tube (101), (201) of the first measurement device and aligned diametrically relative to it, a source of light radiation (111), (211) placed at the free end of one of the sections (110a), (210a) and a photoreceptor (115), (215) arranged directly in line with the light radiation coming from the second section (110b), (210b) of the conductor tube and sensitive to a predetermined wavelength (L₃) of said light radiation corresponding to a peak specific absorption for carbon dioxide.

5. Apparatus according to Claim 4,
in which a return mirror (213) is placed in the light-conducting tube (110), (210) of the transverse measurement device, between two sections (110b) and (110c), (210b) and (210c) of said tube, arranged at right angles, so as to reflect perpendicularly on to the photoreceptor (115), (215), placed facing the free end of the second section (110c), (210c), the radiation emitted by the light source (111), (211).

6. Apparatus according to one of Claims 3, 4 or 5,
in which the fast-switching monochromator device is interposed on the optical path of each of the measurement devices, between a window (103), (114), (203), (214) placed at the outlet of the measuring tube (101), (110), (201), (210) and the associated photoreceptor (105), (115), (205), (215).

7. Apparatus according to Claims 3, 4 or 5,
in which the fast-switching monochromator device is interposed on the optical path of each of the measurement lines, between a window (101), (112), (201), (212) placed at the inlet of the measuring tube (101), (110), (201), (210) and the associated light source (104), (111), (204), (211).

8. Apparatus according to Claim 6, taken in combination with Claim 5,
in which the same fast-switching monochromator device is interposed on the optical path of each of the measurement channels (100), (200), both between the windows placed at the outlet of the axial (101), (201) and transverse (110), (210) measuring tubes and the photoreceptors associated with each of these windows.

9. Apparatus according to one of the preceding claims,
in which the light source (104), (204), (111), (211) is a source of infrared radiation emitting, at least, in the predetermined wavelengths (L₁), (L₂), (L₃).

10. Apparatus according to one of the preceding claims,
in which a pump (11), (21) provided with an adjuster or a flow regulator (12), (22) is installed at the outlet of each measurement channel (10), (20).

## Patentansprüche

1. Verfahren zur Analyse und Messung der Konzentration von am Auspuff von Dieselmotoren ausgestoßenen Feststoffteilchen, bei dem die Probe von am Auslaß des Auspuffs entnommenem Gas in zwei Anteile getrennt wird, wobei der erste auf einer Temperatur gleich oder über einem festgelegten Wert gehalten wird, ab dem die unverbrannten Kohlenwasserstoffe sich in der Gasphase befinden, und wobei der zweite unter eine festgelegte Temperatur gekühlt wird, ab der ein Anteil der im flüssigen Zustand in der Probe enthaltenen unverbrannten Kohlenwasserstoffe vor dem Durchgang durch ein Filter kondensiert ist, das in der Lage ist, die in dieser Probe enthaltenen Feststoffteilchen zurückzuhalten,
dadurch gekennzeichnet, daß es die folgenden Schritte aufweist:
- Messung der Absorption durch jede der zwei Probenanteile von einer Lichtstrahlung, die von einer für zwei festgelegte Wellenlängen geeigneten Quelle ausgesendet wird:
• eine Wellenlänge (L₁), die eine spezifische Absorptionsspitze von Kohlenwasserstoffen darstellt,
• eine Wellenlänge (L₂) außerhalb der Absorptionsspitze und spezifisch für jeden nicht festen Bestandteil, der in signifikanter Menge in den untersuchten Gasen enthalten sein kann,
- Umwandlung der Messungen, die für den auf hoher Temperatur gehaltenen Probenanteil vorgenommen wurden, um daraus abzuleiten:
• die Konzentration an Rußen bei der Wellenlänge (L₂),
• die Konzentration an Rußen und an den gesamten unverbrannten Kohlenwasserstoffen bei der Wellenlänge (L₁),
• die Gesamtkonzentration an unverbrannten Kohlenwasserstoffen durch Differenzbildung zwischen den zwei vorausgehenden Ergebnissen;
- Umwandlung der Messungen, die für den gekühlten Probenanteil vorgenommen wurden, um daraus abzuleiten:
• die Konzentration an nicht kondensierten Kohlenwasserstoffen bei der Wellenlänge (L₁),
• den Zustand des in der Meßstrecke enthaltenen Filters bei einer Wellenlänge (L₂);
- Differenzbildung zwischen der Gesamtkohlenwasserstoffkonzentration und der Konzentration an nicht kondensierten Kohlenwasserstoffen um die Konzentration an kondensierten Wasserstoffen zu erhalten;
- Addition der Konzentration an kondensierten Kohlenwasserstoffen und der Konzentration an Rußen um die Gesamtkonzentration an in der untersuchten Gasprobe enthaltenen Feststoffteilchen zu erhalten.

2. Verfahren zur Analyse und Messung nach Anspruch 1, dadurch gekennzeichnet, daß für jeden der Probenanteile eine Absorptionsmessung einer Lichtstrahlung vorgenommen wird, die von einer für eine Wellenlänge (L₃) geeigneten Quelle ausgesandt worden ist, die der spezifischen Absorptionsspitze von Kohlendioxid entspricht.

3. Gerät zur Durchführung des Verfahrens nach Anspruch 1 oder 2, mit einer Gasprobenentnahmeleitung (3, 6) und zwei an diese Leitung angeschlossenen Meßwegen, wobei ein Weg (10) auf einer Temperatur gleich oder über einem festgelegten Wert gehalten wird, ab dem die unverbrannten Kohlenwasserstoffe sich in der Gasphase befinden, wobei ein Weg (20) einen Behälter (24) zur Kühlung der Probe unterhalb einer festgelegten Temperatur, ab der ein Teil der im flüssigen Zustand in der Probe enthaltenen unverbrannten Kohlenwasserstoffe kondensiert ist, sowie mit einem Filter (25) zur Zurückhaltung der in der vorgenannten Probe enthaltenen Feststoffteilchen, wobei die zwei Meßwege (10), (20) eine optische Meßstrecke (100), (200) aufweisen, die aus einem glatten Rohr (101), (201), in das die Gasprobe eingeführt wird, aus einer an einem Ende des Rohres (101), (201) angeordneten Lichtstrahlungsquelle (104), (204), aus einer schnellschaltenden Monochromatorvorrichtung (206), aus einem Photoempfänger (105), (205), der am anderen Rohrende angeordnet ist und auf zwei festgelegte Wellenlängen der durch die Quelle (104) ausgesandten Strahlung reagiert, eine Wellenlänge (L₁), die der spezifischem Kohlenwasserstoffabsorptionsspitze entspricht, und eine Wellenlänge (L₂), die außerhalb der Absorptionsspitze angeordnet und spezifisch ist für jeden nicht festen Bestandteil, der in signifikanter Menge in der untersuchten Gasprobe enthalten sein kann.

4. Gerät nach Anspruch 3, in dem jede Meßstrecke (100), (200) mit einer optischen Quermeßvorrichtung (109), (209) versehen ist, die ein zweites Lichtübertragungsrohr (110), (210), das am Rohr (101), (201) der Axialmessungsvorrichtung senkrecht zu dessen Achse derart montiert ist, daß zwei von seinen Abschnitten, (110a, 210a) bzw. (110b, 210b) beiderseits des Rohres (101), (201) der ersten Meßvorrichtung und in Bezug auf dieses diametral ausgerichtet angeordnet sind, eine Lichtstrahlungsquelle (111), (211), die am freien Ende von einem der Abschnitte (110a), (210a) angeordnet ist und einen Photoempfänger (115), (215) aufweist, der senkrecht zur Lichtstrahlung angeordnet ist, die aus dem zweiten Abschnitt (110b), (210b) des Leitrohrs und im wesentlichen bei einer festgelegten Wellenlänge (L3) der Lichtstrahlung austritt, die einer spezifischen Absorptionsspize von Kohlendioxid entspricht.

5. Gerät nach Anspruch 4, in dem ein Rücksendespiegel (213) in dem Lichtleitrohr (110), (210) der Quermeßvorrichtung zwischen zwei Abschnitten (110b) und (110c), (210b) und (210c) des Rohres rechtwinklig derart angeordnet ist, daß er die von der Lichtquelle (111), (211) ausgesandte Strahlung senkrecht auf den Photoempfänger (115), (215) reflektiert, der gegenüber dem freien Ende des zweiten Abschnittes (110c), (210c) angeordnet ist.

6. Gerät nach einem der Ansprüche 3, 4 oder 5, in dem die schnellschaltende Monochromatorvorrichtung über dem optischen Weg jeder Meßvorrichtung zwischen einem am Ausgang des Meßrohres (101), (110), (201), (210) angeordneten Fenster (103), (114), (203), (214) und dem zugeordneten Photoempfänger (105), (115), (205), (215) eingefügt ist.

7. Gerät nach einem der Ansprüche 3, 4 oder 5, in dem die schnellschaltende Monochromatorvorrichtung über dem optischen Weg jeder Meßstrecke zwischen einem am Eingang des Meßrohres (101), (110), (210), (210) angeordneten Fenster (101), (112), (201), (212) und der zugeordneten Lichtquelle (104), (111), (204), (211) eingefügt ist.

8. Gerät nach Anspruch 6 in Verbindung mit Anspruch 5, in dem eine gleiche schnellschaltende Monochromatorvorrichtung über dem optischen Weg von jedem Meßweg (100), (200) gleichzeitig zwischen den am Ausgang der Axialmeßrohre (101), (201) und der Quermeßrohre (110), (210) angeordneten Fenstern und den jedem dieser Fenster zugeordneten Photoempfängern eingefügt ist.

9. Gerät nach einem der vorstehenden Ansprüche, in dem die Lichtquelle (104), (204), (111), (211) eine Infrarotstrahlungsquelle ist, die wenigstens in den vorbestimmten Wellenlängen (L1), (L2), (L3) aussendet.

10. Gerät nach einem der Vorstehenden Ansprüche, in dem eine Pumpe (11), (21), die mit einer Durchflußsteuerung oder einem Durchflußregler versehen ist, am Ausgang jedes Meßweges (10), (20) angeordnet ist.
